(19) Europäisches Patentamt
European Patent Office
Office européen des brevets

(11) EP 2 448 994 B1

(12) **EUROPÄISCHE PATENTSCHRIFT**

(45) Veröffentlichungstag und Bekanntmachung des Hinweises auf die Patenterteilung:
**14.08.2013 Patentblatt 2013/33**

(21) Anmeldenummer: **10730144.2**

(22) Anmeldetag: **30.06.2010**

(51) Int Cl.:
***C08G 65/00*** *(2006.01)*

(86) Internationale Anmeldenummer:
**PCT/EP2010/059253**

(87) Internationale Veröffentlichungsnummer:
**WO 2011/000854 (06.01.2011 Gazette 2011/01)**

(54) **VERFAHREN ZUR PHOSPHIN-INITIALISIERTEN HERSTELLUNG VON HYPERVERZWEIGTEN POLYOLEN**

METHOD FOR THE PHOSPHINE-INITIALIZED PRODUCTION OF HYPERBRANCHED POLYOLS

PROCÉDÉ DE PRODUCTION, INITIALISÉE PAR PHOSPHINES, DE POLYOLS HYPERRAMIFIÉS

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **30.06.2009 EP 09164094**

(43) Veröffentlichungstag der Anmeldung:
**09.05.2012 Patentblatt 2012/19**

(73) Patentinhaber: **BASF SE**
**67056 Ludwigshafen (DE)**

(72) Erfinder:
- **MONTERO PANCERA, Sabrina**
  **69469 Weinheim (DE)**
- **RIEGER, Bernhard**
  **85747 Garching (DE)**
- **GUNESCH, Thomas Manfred**
  **89129 Langenau (DE)**

(56) Entgegenhaltungen:
**EP-A1- 1 568 677**
**EP-A1- 1 958 929**
**DE-A1- 10 211 664**
**DE-A1- 19 947 631**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 448 994 B1

Printed by Jouve, 75001 PARIS (FR)

**Beschreibung**

Die vorliegende Erfindung betrifft ein Verfahren zur Herstellung von hyperverzweigten Polyolen (wie Polyglycerolen). Insbesondere betrifft die vorliegende Erfindung ein Verfahren zu Herstellung von hyperverzweigten Polyetherpolyolen.

Aus der DE-A-1 02 11 664 und der US-B-6,822,068 sind Verfahren zur Herstellung hochverzweigter Polyglycerole aus Glycidolen unter Verwendung multifunktioneller Initiatoren mit 1 bis 10000 Hydroxyl-, Thiol-, und/oder Aminogruppen bekannt, die vor ihrem Einsatz durch geeignete Reagenzien deprotoniert werden müssen. Dabei entstehende Nebenprodukte wie Methanol und Wasser müssen vor der eigentlichen Polymerisation destillativ entfernt werden. Das so vorbereitete Initiatorsystem wird anschließend in einem vorzugsweise amidierten Lösungsmittel gelöst, wozu eine Lösung des Monomeren (Glycidol) verdünnt mit einem weiteren Lösungsmittel, bei Temperaturen von 80 bis 140°C zudosiert wird.

Der vorliegenden Erfindung lag die Aufgabe zugrunde, den Nachteilen bekannter Verfahren abzuhelfen und ein verbessertes Verfahren zur Herstellung von hyperverzweigten Polyolen, zum Beispiel Polyetherpolyolen zu entwickeln.

Die erfindungsgemäße Aufgabe wurde gelöst, mittels eines Verfahrens zur Herstellung von hyperverzweigten Polyolen, bei dem Epoxialkohole in Gegenwart von Phosphinen umsetzt werden.

Als Epoxialkohole eignen sich 4,5-Epoxy-1-pentanol, 3,4-Epoxy-1-butanol, (S)-(-)-Glycidol, (R)-(+)-Glycidol, besonders bevorzugt 2,3-Epoxy-1-propanol (Glycidol), (R,S)-(+/-)-2,3-Epoxy-1-propanol. Des Weiteren kann 5,6-Epoxy-1-hexanol, 7,8-Epoxy-1-heptanol, sowie analoge Derivate; 2,3-Epoxy-1-methyl-1-propanol, 2,3-Epoxy-1-ethyl-1-propanol, 2,3-Epoxy-1-propyl-1-propanol, sowie analoge Derivate; 2,3-Epoxy-1-dimethyl-1-propanol, 2,3-Epoxy-1-diethyl-1-propanol, 2,3-Epoxy-1-dipropyl-1-propanol, sowie analoge Derivate; 3,4-Epoxy-1-methyl-1-butanol, 3,4-Epoxy-1-ethyl-1-butanol, 3,4-Epoxy-1-propyl-1-butanol, sowie analoge Derivate; 3,4-Epoxy-1-dimethyl-1-butanol, 3,4-Epoxy-1-diethyl-1-butanol, 3,4-Epoxy-1-dipropyl-1-butanol, etc.;4,5-Epoxy-1-methyl-1-pentanol, 4,5-Epoxy-1-ethyl-1-pentanol, 4,5-Epoxy-1-propyl-1-pentanol, sowie analoge Derivate; 4,5-Epoxy-1-dimethyl-1-pentanol, 4,5-Epoxy-1-diethyl-1-pentanol, 4,5-Epoxy-1-dipropyl-1-pentanol, sowie analoge Derivate als Epoxialkohol eingesetzt werden. Darüber hinaus ist der Einsatz weiterer Epoxialkohole möglich, deren Struktur sich zum Beispiel durch das Variieren der chemischen Reste zwischen dem Epoxyring und der Hydroxylgruppe ergibt.

Es können Mischungen unterschiedlicher Epoxialkohole polymerisiert werden. Im Allgemeinen jedoch werden nur Epoxialkohole eines Typs eingesetzt.

Besonders gut geeignet für das erfindungsgemäße Verfahren sind die bei der Reaktionstemperatur flüssigen und mit den Epoxialkoholen homogen mischbaren Phosphine. Feste Phosphine sind insbesondere dann geeignet, wenn sie in den Epoxialkoholen löslich sind. Ferner sind gasförmige Phosphine geeigent. Als Phosphine eignen sich Monoalkyl-, Monoarylphosphine, Dialkyl-, Diarylphosphine und Trialkyl-, Triarylphosphine. Bevorzugt sind Arylphosphine geeignet. Es eigenen sich beispielsweise Phosphin ($PH_3$), Methylphospin, Ethylphosphin und die entsprechenden Analoga; Phenylphosphin, o-Tolylphosphin, 1-Naphtylphosphin; Dimethylphosphin, Diethylphosphin, und die entsprechenden Analoga; Diphenylphosphin; Di(o-tolyl)phosphin, Di-1-naphtylphosphin; Trimethylphosphin, Triethylphosphin, und die entsprechenden Analoga; Triphenylphosphin; Tri(o-tolyl)phosphin, Tri-1-naphtylphosphin. Es ist möglich eine Mischung aus zwei oder mehr Phosphinen zu verwenden. Im Allgemeinen wird jedoch nur ein Typ von Phosphinen verwendet. Besonders bevorzugt wird Diphenylphosphin eingesetzt.

Bei der Mischung der Reaktionskomponenten können Phosphine zu Epoxialkoholen gegeben werden oder bevorzugt Epoxialkohole zu Phosphinen hinzugefügt werden.

Das Eindosieren kann auf einmal oder im Fall der bevorzugten Eindosierungsreihenfolge diskontinuierlich, stufenweise (absatzweise) oder bevorzugt kontinuierlich erfolgen.

Je nach Einsatzstoffen oder gewünschter Reaktionsgeschwindigkeit ist es möglich, das erfindungsgemäße Verfahren bei relativ niedrigen oder relativ hohen Temperaturen durchzuführen. Die Reaktion kann bei einer Temperatur von 0 bis 200 °C, bevorzugt von 4 bis 50 °C, besonders bevorzugt von 15 bis 30 °C, insbesondere bei Raumtemperatur durchgeführt werden. Zum Beispiel kann die Reaktion bei Temperaturen von 0 bis 70 °C durchgeführt werden.

Die Reaktion kann bei Drücken von 0,01 bis 50 bar, bevorzugt von 0,1 bis 5 bar, insbesondere Normaldruck (Atmosphärendruck) durchgeführt werden.

Das Molverhältnis von Epoxialkohol zu Phosphin kann in weiten Grenzen variiert werden und beträgt bevorzugt von 5000:1 bis 10:1, besonders bevorzugt von 500:1 bis 30:1, insbesondere von 300:1 bis 50:1. In der Regel wird eine möglichst geringe Menge an Phosphin verwendet, die so gewählt wird, dass die Umsetzungsgeschwindigkeit ausreichend und der Umsetzungsgrad nahezu vollständig beziehungsweise vollständig ist.

Die Umsetzung kann in Gegenwart eines Lösungsmittels durchgeführt werden. Sind die eingesetzten Phosphine bei der Reaktionstemperatur mit den verwendeten Epoxialkohol nicht mischbar, ist es bevorzugt mindestens ein Lösungsmittel einzusetzen. Insbesondere bei niedrigen Temperaturen kann bei dem erfindungsgemäßen Verfahren auf ein Lösemittel als Wärmeabsorber verzichtet werden. Bei höheren Reaktionstemperaturen kann insbesondere bei exothermen Polymerisationen mindestens ein Lösemittel zur Reaktionskontrolle eingesetzt werden. Die Menge an Lösungsmittel kann in weiten Grenzen variiert werden und das Gewichtsverhältnis beträgt in der Regel von 0,1:1 1 bis 1000:1, bevorzugt von 1:1 1 bis 100:1, besonders von 5:1 bis 50:1, bezogen auf Epoxialkohol. Bevorzugt wird die Umsetzung im Wesentlichen in Abwesenheit eines Lösungsmittels, also von 0,09:1 bis 0,0001:1, bevorzugt von 0,05:1 bis 0,001:1, bezogen auf den Epoxialkohol durchgeführt. Besonders bevorzugt wird die Reaktion in Abwesenheit eines Lösungsmittels durchgeführt. Die Epoxialkohole und die Phosphine sind im Sinne dieser Erfindung keine Lösungsmittel.

Als Lösemittel eignen sich jene Lösemittel, in denen Posphine und/oder Epoxialkohole löslich sind. Als Lösungsmittel eignen sich insbesondere Amide, zum Beispiel Dimethylformamid, aber auch cyclische Ether, wie Tetrahydrofuran und/oder aliphatische Ether, zum Beispiel Diglyme.

Die Reaktion kann bevorzugt unter Inertgasatmosphäre durchgeführt werden. Als Inertgase eignen sich all jene Gase, die so reaktionsträge sind, dass sie nicht mit dem Reaktionsgemisch reagieren. Hierzu eignen sich zum Beispiel Stickstoff, Helium und/oder Argon.

Die Reaktionszeiten können in weiten Grenzen variieren. Sie können sich im Minutenrahmen bewegen oder über Tage erstrecken. Sie können zum Beispiel von 0,5 bis 500 h beziehungsweise von 1 bis 200 h betragen. Die Polymerisation ist in der Regel beendet, sobald das Monomer, der Epoxialkohol, aufgebraucht ist.

Das nach dem erfindungsgemäßen Verfahren erhaltene hyperverzweigte Polyol kann entweder direkt weiter verwendet werden oder vor einer Verwendung gereinigt werden. Die Polyole können während oder bevorzugt nach beendeter Polymerisation durch Lösen in einem geeigneten Lösungsmittel, wie Methanol und/oder durch Filtration über Ionenaustauscher, bevorzugt nur Lösen in einem geeigneten Lösungsmittel, neutralisiert sowie anschließend durch Fällung mit z.B. Aceton gereinigt werden (Sunder, A.; Hanselmann, R.; Frey, H.; Müllhaupt, R. Macromolecules 1999, 32, 4240). Das erhaltene Produkt kann im Vakuum getrocknet werden, zum Beispiel bei Temperaturen von 0 bis 150°C, vorzugsweise bei 30 bis 80 °C.

Die mittels des erfindungsgemäßen Verfahrens hergestellten hyperverzweigten Polyole, sind zum Beispiel Polyetherpolyole. Deren Etherbrücke kann abhängig von dem als Ausgangsstoff eingesetzten Epoxialkohol aromatisch und/oder aliphatisch sein. Je nachdem ob eine Mischung unterschiedlicher Epoxialkohole eingesetzt wird oder nicht, können die Etherbrücken im Molekül unterschiedlicher natur, wim wesentlichen gleich oder gleich sein. Bevorzugt enthalten die hyperverzweigten Polyole Etherbrücken einer Art. Die Etherbrücken sind bevorzugt aliphatisch. Insbesondere umfassen diese drei Kohlenstoff-Atome umfassen. Bevorzugt werden nach dem erfindungsgemäßen Verfahren Polyole hergestellt, die Strukturen aufweisen, wie sie in Abbildung 1 gezeigt ist.

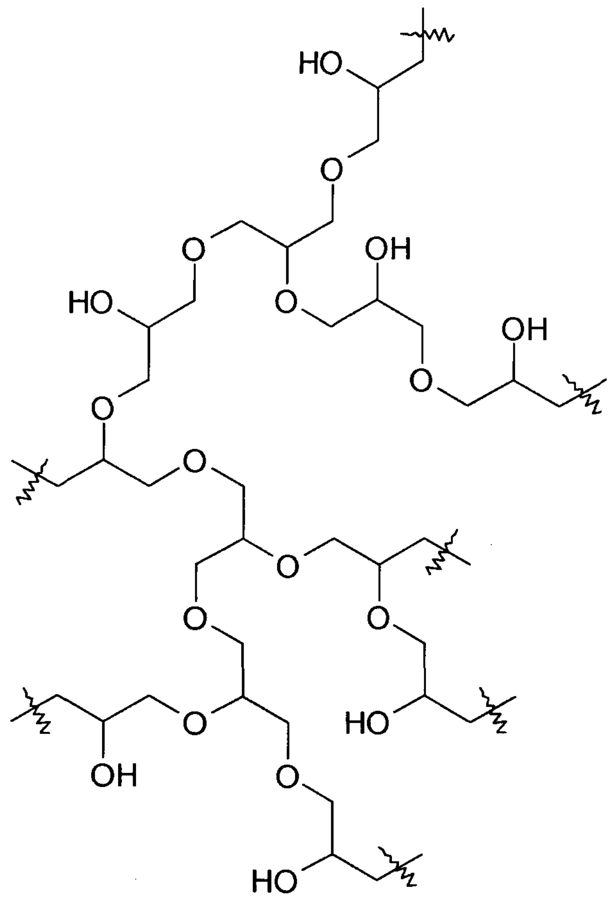

Abbildung 1: Polyetherpolyol Struktur.

Die hyperverzweigten Polyole können hinsichtlich ihres mittleren Molmassengewichtes analysiert werden. Die Messungen des Molmassengewichtes ($M_w$) können mittels MALDI-TOF-MS-Analyse durchgeführt werden. Das erhaltene Polymerisat, das hyperverzweigte Polyol, zum Beispiel Polyetherpolyol, hat in der Regel ein mittleres Molmassengewicht von bis zu 1500 g/mol, also 200 bis 1500 g/mol, bevorzugt 400 bis 1400 g/mol, besonders bevorzugt 500 bis 1200 g/mol.

Des Weiteren kann das Polyol über seine Molmassenverteilung (Polydispersität = PDI) charakterisiert werden. Das Maß der Polydispersität ist durch nachfolgende Formel charakterisiert, d.h. die Polydispersität ist das Verhältnis des Gewichtsmittels der Molmasse zum Zahlenmittel der Molmasse und kann gleich oder größer als die Zahl 1 sein. Formel 1: Formel zur Berechnung der Polydispersität.

$$PDI = \frac{M_w}{M_n} \geq 1$$

$M_w$ = Gewichtsmittel der Molmasse (auch als mittleres Molmassengewicht bezeichnet)
$M_n$ = Zahlenmittel der Molmasse

Das Gewichtsmittel der Molmasse (Mw) und das Zahlenmittel der Molmasse (Mn) lassen sich mittels Gelpermeationschromatographie (GPC) ermitteln.

Die nach dem erfindungsgemäßen Verfahren erhaltenen Polyole haben in der Regel eine Molmassenverteilung (Polydispersität = PDI) von kleiner als 2,5, bevorzugt kleiner als 2, besonders bevorzugt kleiner als 1,7, insbesondere kleiner als 1,4 und größer oder gleich 1, bevorzugt größer als 1, besonders bevorzugt größer als 1,1, insbesondere größer als 1,15.

Die nach dem erfindungsgemäßen Verfahren erhältlichen Polyole sind hyperverzweigt, d.h. sie weisen einen

hohen Anteil an Verzweigungspunkten auf. Sie haben einen hohen bis sehr hohen Verzweigungsgrad (V). Im Allgemeinen liegt der Verzweigungsgrad DB bei Werten von 10 bis 99 %, bevorzugt von 25 bis 90 % und besonders bevorzugt von 30 bis 80 %. Der Begriff "hyperverzeigt" wird im Rahmen der vorliegenden Erfindung synonym zu "hochverzweigt" verwendet. Hyperverzweigte Polymere sind von den Dendrimeren zu unterscheiden. Zur Definition des Verzweigungsgrad (V) ("Degree of Branching") siehe H. Frey et al., Acta Polym. 1997, 48, 30. Zur Definition des Begriffes "hyperverzweigt" siehe Sunder et al., Chem. Eur. J. 2000, 6 (14), 2499-2506. Der Verzweigungsgrad lässt sich mit Hilfe von "invers gated" $^{13}$NMR-Spektren berechnen.
Der Verzweigungsgrad beträgt in der Regel 10 bis 66%, bevorzugt 20 bis 55%, besonders bevorzugt 20 bis 50%, insbesondere 25 bis 40%.

Tritration der nach dem erfindungsgemäßen Verfahren hergestellten Polyole erlaubt die Feststellung der Zahl der endständigen Hydroxylgruppen. (Carey, M.; Wellons, S.; Elder, D. Journal of Cellular Plastics 1984, 20, 42.) Die Zahl der endständigen Hydroxylgruppen liegt bevorzugt im Bereich von 5 bis 20 mmol, besonders bevorzugt von 5 bis 15 mmol, ganz besonders bevorzugt von 10 bis 15 mmol pro Gramm Polyol.

Die erfindungsgemäß herstellbaren Polyole eignen sich in der chemischen und pharmazeutischen Industrie, beispielsweise als polymere Trägermaterialien für Katalysatoren und Wirkstoffe, als Umhüllung von Arzneimitteln oder Vitaminen oder als Proteinmimetika in der Biomineralisation von $CaCO_3$ (J. Mater. Chem., 2008, Vol. 18, Seite 2789 bis 2797) als Additive für Lacke und Klebstoffe.

Das erfindungsgemäße Verfahren ermöglicht auch eine Reaktionsführung ohne die Verwendung von Lösungsmitteln. Dies hat eine erhöhte Wirtschaftlichkeit zur Folge, da Lösungsmittel nach der Reaktionsführung nicht abgetrennt und aufbereitet werden müssen. Der Verzicht auf toxische und/oder brennbare Lösungsmittel ist zudem unter Sicherheitsaspekten von Vorteil.

Beispiele

Beispiel 1:

0,43 g (0,4 ml; 2,31 mmol) Diphenylphosphin wurden unter Intertgasatmosphäre (Argon) mit 22,29 g (20 ml; 300,89 mmol) frischdestilliertem Glycidol vermischt und bei 25°C für 96 h unter ständiger magnetischer Rührung reagieren lassen.

Nach Beendigung der Reaktion wurde das Polymer in 40 ml Methanol gelöst und anschließend in 400 ml Aceton gefällt. Das ausgefällte Polymer wurde vom überstehenden Lösungsmittel durch abdekantieren getrennt. Diese Prozedur wurde insgesamt zweimal ausgeführt.

Die überstehende Lösung wurde abdekantiert und das gewonnene Produkt bei 60°C im Vakuum getrocknet. Man erhielt 13 g (58 %) eines gelblichen hochviskosen Harzes mit einem mittleren Molekulargewicht von ca. 1000 g/mol (bestimmt nach $M_w$ = 970 (GPC) bzw. 1015 (MALDI) und einer Polydispersität von 1,4 (bestimmt nach PDI = $M_w/M_n$)

Beispiel 2:

Beispiel 1 wurde zur Demonstration der Reproduzierbarkeit wiederholt. Es wurden 0,43 g (0,4 ml; 2,31 mmol) Diphenylphosphin unter Inertgasatmosphäre (Argon) mit 22,29 g (20 ml; 300,89 mmol) frisch destilliertem Glycidol vermischt und bei 25°C für 96 h ständig magnetisch gerührt.

Nach Beendigung der Reaktion wurde das Polymer in 40 ml Methanol gelöst und anschließend in 400 ml Aceton gefällt. Das ausgefällte Polymer wurde vom überstehenden Lösungsmittel durch abdekantieren getrennt. Diese Prozedur wurde insgesamt zweimal ausgeführt.

Die überstehende Lösung wurde abdekantiert und das gewonnene Produkt bei 60°C im Vakuum getrocknet. Man erhielt 13 g (58%) eines gelblichen hochviskosen Harzes mit einem mittleren Molekulargewicht von $M_n$ = 790 g/mol (GPC) bzw. 760 g/mol (MALDI) und einer Polydispersität von 1,47 (GPC-Messung).

Beispiel 3:

Es wurden 0,22 g (0,2 ml; 1,16 mmol) Diphenylphosphin unter Inertgasatmosphäre (Argon) mit 11,15 g (10 ml; 150,45 mmol) frisch destilliertem Glycidol vermischt und bei 4 °C für 3 Wochen ständig gerührt.

Nach Beendigung der Reaktion wurde das Polymer in Methanol gelöst und anschließend in Aceton gefällt. Das ausgefällte Polymer wurde vom überstehenden Lösungsmittel abgetrennt. Diese Prozedur wurde insgesamt zweimal ausgeführt.

Das gewonnene Produkt wurde bei 60°C im Vakuum getrocknet. Es wurden 6 g (54 %) eines farblosen hochviskosen Harzes mit einem mittleren Molekulargewicht von $M_n$ = 826 g/mol (GPC) und einer Polydispersität von 1,49 (GPC-Messung) erhalten.

Beispiel 4:

Es wurden 0,11 g (0,1 ml; 0,58 mmol) Diphenylphosphin unter Intertgasatmosphäre (Argon) mit 22,29 g (20 ml; 300,89 mmol) frisch destilliertem Glycidol vermischt und bei 40°C für 96 h ständig gerührt.
Nach Beendigung der Reaktion wurde das Polymer in Methanol gelöst und anschließend in Aceton gefällt. Das ausgefällte Polymer wurde vom überstehenden Lösungsmittel durch abgetrennt. Diese Prozedur wurde insgesamt zweimal ausgeführt.
Das gewonnene Produkt wurde bei 60°C im Vakuum getrocknet. Es wurden 11 g (49 %) eines gelblichen hochviskosen Harzes mit einem mittleren Molekulargewicht von $M_n$ = 595 g/mol (GPC) und einer Polydispersität von 1,50 (GPC-Messung) erhalten.

Beispiel 5:

Es wurden 0,22 g (0,2 ml; 1,16 mmol) Diphenylphosphin unter Intertgasatmosphäre (Argon) mit 5,58 g (5 ml; 75,23 mmol) frisch destilliertem Glycidol vermischt und bei 75 °C für 1 h ständig gerührt.
Nach Beendigung der Reaktion lag das Produkt als dunkelbraunes hochviskoses Harz vor.

Beispiel zur Messung des Molmassengewichtes

Die Messungen wurden mit einem Bruker Biflex III MALDI-TOF Massenspektrometer aufgenommen, welches mit einem Stickstofflaser ausgestattet war, der 3ns Laserpulse bei 337 nm lieferte. Als Matrix wurde Dithranol benutzt. Die Proben wurden vorbereitet indem das Polymer in Konzentrationen von 1g/L in Methanol gelöst wurde. Davon wurde zusammen mit der Matrix eine 1:1 Mischung hergestellt. Ein Teil dieser Lösung wurde nach dem Verdampfen des Methanols und der Ausbildung eines dünnen Matrix/Analyt Filmes vermessen. Die Ionen wurden auf 21,50 kV beschleunigt und im "reflectron mode" gemessen.

Beispiel zur Durchführung der Gelpermeationschromatographie (GPC)

Zur Durchführung der Gelpermeationschromatographie-Messungen wurden die Polyole, zum Beispiel Polyetherpolyole in demineralisiertem Wasser in Konzentrationen von 5 g/L gelöst. Anschließend wurden die gelösten Polyole, zum Beispiel Polyetherpolyole mit Wasser als Eluenten bei Raumtemperatur auf PSS Suprema Säulen analysiert. Als Standard zur Kalibrierung dienten definierte Polyethylenglykole mit Molekulargewichten zwischen 200-500.000 g/mol und sehr niedrigen Polydispersitäten (~1,05). Die Verwendeten Standarts sind zum Beispiel bei Sigma Aldrich unter dem Namen "Poly(ethylene glycol) standard, for GPC" komerziell erhältlich. Die Detektion erfolgte mittels eines Brechungsindexdetektors (RI-Detektor).

Beispiel zur Bestimmung des Verzweigungsgrades (DB):

Hierzu wurden $^1$H-NMR und $^{13}$C-NMR Spektren in $d_4$-Methanol oder $D_2O$ bei Konzentrationen von 100 g/L auf einem Bruker ARX 300 Spektrometer bei 300,13 zum Beispiel 75,4 MHz vermessen.
Bei der Auswertung ist zu berücksichtigen, dass sich lineare Einheiten (L) während der Polymerisation ausbilden, wenn nur eine der zwei möglichen Propagationsstellen des AB2 Monomers weiterreagiert. Beim Glycidol sind die zwei Kettenfortpflanzungsstellen zusätzlich inäquivalent, wodurch auch zwischen Propagation an der primären (L2) und der sekundären (L1) Alkoholgruppe unterschieden werden muss. Reagieren hingegen sowohl die primäre als auch die sekundäre Alkohol- bzw. Alkoholatgruppe desselben Glycidolmoleküls weiter, entstehen Verzweigungsstellen beziehungsweise dendritische Einheiten (D). Wenn schließlich keine der beiden Alkohol- bzw. Alkoholatfunktionen zur Kettenfortpflanzung beiträgt ergibt sich eine terminale Einheit (T).
Zur Bestimmung des Verzweigungsgrades wurden die erhaltenen Spektren wie folgend beschrieben ausgewertet. In den gemessenen "invers gated" $^{13}$C-NMR Spektren waren sieben Signale zwischen 60 und 85 ppm erkennbar, die den einzelnen Kohlenstoffatomen der dargestellten Struktureinheiten wie folgt zugeordnet werden konnten: Den linearen Einheiten, die durch Propagation des sekundären Alkoholats entstehen ($L_1$) konnten die Signale bei 62,8 ppm ($CH_2OH$), 71,2 ppm ($CH_2$) und 81,5 ppm (CH) zugewiesen werden.
Die linearen Einheiten, die durch Propagation des primären Alkoholats entstehen ($L_2$) zeichnen sich durch Signale bei 70,9 ppm (CHOH) und 74,1 ppm (beide $CH_2$) aus. Den terminalen Einheiten (T) konnten die Signale bei 64,6 ppm ($CH_2OH$) und zwei der Signale im Bereich zwischen 72,2-73,1 ppm ($CH_2$ und CHOH) zugeordnet werden. In demselbigen Bereich befanden sich auch zwei Signale ($CH_2$) der dendritischen Einheiten (D), die mit letzteren überlappen. Das letzte Signal dieser Struktureinheit ist bei 79,9 ppm (CH) zu finden.
Die Messung der $^{13}$C-NMR Spektren im "invers gated" Modus erlaubt, aufgrund der Integrierbarkeit der Signale,

weiterführende Aussagen zu der relativen Häufigkeit der einzelnen Struktureinheiten im Polymer.

Die Ergebnisse der Integration sind in folgender Tabelle zusammengefasst:

Tabelle 1: Relative Häufigkeit der Struktureinheiten in hyperverzweigtem Polyglycerol.

| Einheit | $L_1$ | D | $2L_2$ | 2D, 2T | $L_1$, $L_2$ | T | $L_1$ |
|---|---|---|---|---|---|---|---|
| ppm | 81.4 - 81.6 | 79.6 - 80.3 | 73.9 - 74.5 | 72.2 - 73.1 | 70.7 - 71.4 | 64.5 - 64.8 | 62.5 - 62.9 |
| Integral | 1.00 | 2.17 | 18.00 | 14.11 | 9.28 | 4.40 | 1.00 |

| | Linear ($L_1$) | Linear ($L_2$) | Terminal | Dendritisch |
|---|---|---|---|---|
| Relative Häufigkeit (% | 6 | 53 | 26 | 15 |

Tabelle 1 lässt anhand des $L_2$-Wertes, der mit 53% am höchsten ist, vermuten, dass das Polymer großteils über eine Propagation an der primären Alkoholatfunktion wächst. Die in Tabelle 1 aufgeführten relativen Häufigkeiten der einzelnen Struktureinheiten können verwendet werden, um Aussagen über den Verzweigungsgrad der Polymere zu treffen. Letzterer nimmt definitionsgemäß für lineare Polymere den Wert 0 und für perfekt verzweigte Dendrimere den Wert 1 an. Der Verzweigungsgrad für hyperverzweigte Polymere liegt zwischen diesen Werten und kann unter speziellen Bedingungen, wie zum Beispiel sehr langsamer Monomerzugabe, bei Polymerisationen von $AB_2$-Monomeren maximal den Wert 0,66 bzw. 66 % erreichen. (Radke, W.; Litvinenko, G.; Müller, A. H. E. Macromolecules 1998, 31, 239.)

Rechnerisch lässt sich der Verzweigungsgrad auf Basis der Integrale der einzelnen Struktureinheiten, als Verhältnis der dendritischen zu der Summe aus linearen und dendritischen Einheiten nach folgender Formel bestimmen (Hölter, D.; Burgath, A.; Frey, H. Acta Polym. 1997, 48, 30.)

Formel 2: Berechnung des Verzweigungsgrades.

$$V = \frac{2D}{2D + L}$$

V = Verzweigungsgrad
D = relative Häufigkeit der dendritischen Einheiten
L = relative Häufigkeiten der $L_1$ und $L_2$ Einheiten

Durch Einsetzen der Werte aus Tabelle 1 lässt sich ein Verzweigungsgrad von 34 % errechnen.

## Patentansprüche

1. Verfahren zur Herstellung von hyperverzweigten Polyolen, **dadurch gekennzeichnet, dass** Epoxialkohole in Gegenwart von Phosphinen umgesetzt werden.

2. Verfahren nach Anspruch 1, **dadurch gekennzeichnet, dass** die Polyole Polyetherpolyole sind.

3. Verfahren nach Anspruch 1 oder 2, **dadurch gekennzeichnet, dass** die Umsetzung bei einer Temperatur von 0 bis 200°C durchgeführt wird.

4. Verfahren nach mindestens einem der Ansprüche 1 bis 3, **dadurch gekennzeichnet, dass** die Umsetzung bei einem Druck von 0,01 bis 50 bar durchgeführt wird.

5. Verfahren nach mindestens einem der Ansprüche 1 bis 4, **dadurch gekennzeichnet, dass** die Umsetzung in Gegenwart eines Lösungsmittels durchgeführt wird.

6. Verfahren nach mindestens einem der Ansprüche 1 bis **dadurch gekennzeichnet, dass** die Umsetzung im Wesentlichen in Abwesenheit eines Lösungsmittels durchgeführt wird.

7. Verfahren nach mindestens einem der Ansprüche 1 bis 6, **dadurch gekennzeichnet, dass** hoch- bzw. hyperverzweigte Polyole mit einem mittleren Molmassengewicht ($M_w$) von bis zu 1500 g/mol erhält.

8. Verfahren nach mindestens einem der Ansprüche 1 bis 7, **dadurch gekennzeichnet, dass** man hoch- bzw. hyperverzweigte Polyole mit einer Molmassenverteilung von kleiner als 2,5 erhält.

9. Verfahren nach mindestens einem der Ansprüche 1 bis 8, **dadurch gekennzeichnet, dass** man als Epoxialkohol 2,3-Epoxi-1-propanol (Glycidol) einsetzt.

10. Verfahren nach mindestens einem der Ansprüche 1 bis 9, **dadurch gekennzeichnet, dass** man als Phosphin Diphenylphosphin einsetzt.

## Claims

1. A process for prepaying hyperbranched polyols, which comprised reaching epoxy alcohols in the presence of phosphenes.

2. The process according to claim 1, the polyols being polyether polyols.

3. The process according to claim 1 or 2, the redaction being carried out at a temperature of 0 to 200°C.

4. The process according to at least one of claims 1 to 3, the redaction bering carried out at a pressure of 0.01 to 50 bar.

5. The process according to at least once of claims 1 to 4, the redaction being carried out in the pretence of a solvent.

6. The process according to at least one of claims 1 to 5, the redaction being carried out substantially in the absence of a solvent.

7. The process according to at least one of claims 1 to 6, producing highly branched and/or hyperbranched polyols having an average molar mass weight ($M_w$) of up to 1500 g/mol.

8. The process according to at least one of claims 1 to 7, producing highly branched and/or hyperbranched polyols heaving a molar mass distribution of less than 2.5.

9. The process according to at least one of claims 1 to 8, musing 2,3-epoxy-1-propanol (glycidol) as epoxy alcohol.

10. The process according to at least one of claims 1 to 9, using diphenylphosphine as phosphene.

## Revendications

1. Procédé pour la production de polyols hyper-ramifiés, **caractérisé en ce qu'**on fait réagir des époxyalcools en présence de phosphines.

2. Procédé selon la revendication 1, **caractérise en ce que** les polyols sont des polyétherpolyols.

3. Procédé selon la revendication 1 ou 2, **caractérisé en ce qu'**on effectue la réaction à une température de 0 à 200 °C.

4. Procédé selon au moins l'une quelconque des revendications 1 à 3, **caractérisé en ce qu'**on effectue la réaction sous une pression de 0,01 à 50 bars.

5. Procédé selon au moins l'une quelconque des revendications 1 à 4, **caractérise en ce qu'**on effectue la réaction en présence d'un solvant.

6. Procédé selon au moins l'une quelconque des revendications 1 à 5, **caractérise en ce qu'**on effectue la réaction essentiellement en absence d'un solvant.

7. Procédé selon au moins l'une quelconque des revendications 1 à 6, **caractérise en ce qu'**on obtient des polyols hautement ou hyper-ramifiés ayant une masse moléculaire ($M_w$) moyenne de jusqu'à 1 500 g/mole.

8. Procédé selon au moins l'une quelconque des revendications 1 à 7, **caractérisé en ce qu'**on obtient des polyols hautement ou hyper-ramifiés ayant une distribution de masse moléculaire de moins de 2,5.

9. Procédé selon au moins l'une quelconque des revendication 1 à 8, **caractérisé en ce qu'**on utilise comme époxy-alcool le 2,3-époxy-1-propanol (Glycidol).

10. Procédé selon au moins l'une quelconque des revendication 1 à 9, **caractérisé en ce qu'**on utilisé comme phosphine la diphénylphosphine.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 10211664 A
- US B6822068 A


### In der Beschreibung aufgeführte Nicht-Patentliteratur


- **H. FREY et al.** *Acta Polym.,* 1997, vol. 48, 30
- **SUNDER et al.** *Chem. Eur. J.,* 2000, vol. 6 (14), 2499-2506
- **CAREY, M. ; WELLONS, S. ; ELDER, D.** *Journal of Cellular Plastics,* 1984, vol. 20, 42
- *J. Mater. Chem.,* 2008, vol. 18, 2789-2797
- **RADKE, W. ; LITVINENKO, G. ; MÜLLER, A. H. E.** *Macromolecules,* 1998, vol. 31, 239
- **HÖLTER, D. ; BURGATH, A. ; FREY, H.** *Acta Polym.,* 1997, vol. 48, 30